Europäisches Patentamt

European Patent Office

Office européen des brevets

(11) Publication number: **0 582 716 A1**

## EUROPEAN PATENT APPLICATION
### published in accordance with Art. 158(3) EPC

(21) Application number: 93903334.6

(22) Date of filing: 09.02.93

(86) International application number: PCT/JP93/00167

(87) International publication number: WO 93/16484 (19.08.93 93/20)

(51) Int. Cl.5: **H01J 31/15, H01J 9/22, H01J 9/39, H01J 29/86, H01J 29/94**

(30) Priority: **10.02.92 JP 57350/92**
**10.02.92 JP 57351/92**
**10.02.92 JP 57352/92**

(43) Date of publication of application:
**16.02.94 Bulletin 94/07**

(84) Designated Contracting States:
**DE FR GB IT NL**

(71) Applicant: **SEIKO EPSON CORPORATION**
**4-1, Nishishinjuku 2-chome**
**Shinjuku-ku Tokyo 160(JP)**

(72) Inventor: **KOMATSU, Hiroshi Seiko Epson**
**Corporation**
**3-5, Owa 3-chome**
**Suwa-shi Nagano 392(JP)**

(74) Representative: **Blumbach Weser Bergen**
**Kramer Zwirner Hoffmann Patentanwälte**
**Bahnhofstrasse 103**
**D-82166 Gräfelfing (DE)**

(54) FLUORESCENT DISPLAY AND METHOD OF FORMING FLUORESCENT LAYER THEREIN, AND VACUUM SEALING METHOD AND VACUUM LEVEL ACCELERATING METHOD FOR SPACE IN THE DISPLAY.

(57) This invention relates to an improvement in a fluorescent display on which a desired image is displayed by applying in a vacuum electrons from a field electron emission element to a fluorescent layer, and more particularly to a structure of a fluorescent layer and method of forming the same, and a vacuum sealed structure, vacuum sealing method and vacuum level accelerating method for the space in the display. The fluorescent layer is formed out of a fluorescent body and glass of a low melting point serving as a bonding agent thereof. A method of forming the fluorescent layer consists of the steps of applying paste, which is composed of a mixture of, for example, powder of a fluorescent material, powder of glass of a low melting point and a binder, to a substrate, and baking the substrate at a temperature not lower than the melting point of the glass referred to above. Solder is used as a sealing means for the space in the display, and a sealing method therefor consists, for example, of the steps of placing a display body with its discharge port facing downward on a stand in a vacuum chamber, and thermally melting spherical solder, which is placed between the stand and the discharge port, so as to pack the solder in the discharge port. To obtain a means for increasing a vacuum level, thin film of getter material is formed on the inner surface of the above-mentioned space. The air in this space is removed and the space is sealed, a laser beam being then applied to the getter material to evaporation-revive the same.

Rank Xerox (UK) Business Services
(3.10/3.09/3.3.4)

# FIG. 1

Technical Field

The present invention relates to a fluorescent display apparatus such as a light-emission-type character display for use as a display of, for example, clocks, meters mounted on a vehicle, OA equipment and the other various information guide displays or a small-size matrix display utilized in a view-finder of a cam coder, and more particularly to a fluorescent display apparatus for performing display by irradiating a fluorescent layer with electrons discharged from an electric-field electron discharge device to perform a desired display, a method of forming a fluorescent layer of the apparatus, a method of sealing vacuum in the space of the apparatus and a method of raising the degree of vacuum.

Background Art

Recently, a fluorescent display apparatus of the foregoing type having an electric-field electron device to serve as the electron source and the fluorescent layer thereof is irradiated with electrons emitted from the electric-field electron discharge device to perform a display has been suggested (for example, see Technical Digest of IVMC91).

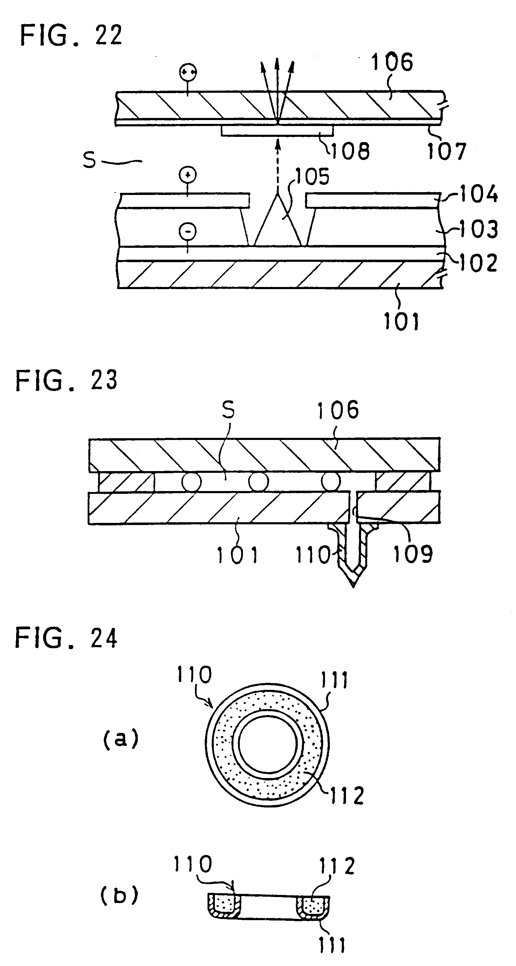

Fig. 22 illustrates an example of a fluorescent display apparatus of the foregoing type constituted such that a conductive cathode electrode 102 is formed on a device substrate 101 made of glass or the like. A gate electrode 104 is formed on the cathode electrode 102 while interposing an insulating layer 103. Further, a substantially-conical electric-field electron discharge device (microtip) 105 is, in an opening formed in the insulating layer 103 and the gate electrode 104, disposed on the cathode electrode 102. An anode electrode 107 made of ITO or the like is formed on the lower surface of an opposing substrate 106 disposed above the device substrate 101 and made of glass or the like, and a fluorescent layer 108 is formed on the lower surface of it at a position above the electric-field electron discharge device 105.

A portion between the electric-field electron discharge device 105 and the fluorescent layer 108, that is, space S between the two substrates 101 and 106 is made vacuum, and voltage of a predetermined level is applied to the cathode electrode 102, the gate electrode 104 and the anode electrode 107. As a result, electrons are caused to discharge from the leading portion of the conical electric-field electron discharge device 105 to irradiate the fluorescent layer 108 so that a desired display is performed.

The conventional structure has the fluorescent layer 108 formed by causing fluorescent substance powder to simply adhere to the lower surface of the anode electrode 107 and it is held by only Van der Waals force. There therefore arise problems, for example, in that, if the electric-field electron discharge device 105 and the fluorescent layer 108 are made to come closer to about 50 $\mu$m in order to improve the resolution or to reduce the thickness, the electrostatic attraction force is made stronger than the Van der Waals force, causing the fluorescent layer to be separated from the surface of the anode electrode. Accordingly, a structure for high-speed electron beams has been suggested in which a conductive thin film made of Al or the like is formed on the surface of the fluorescent layer. However, the foregoing structure cannot be adapted to low-speed electron beams because electrons cannot penetrate the conductive thin film.

In order to make the space S to be vacuum, the conventional structure has been arranged, for example, as shown in Fig. 23 such that an exhaust port 109 is formed in the substrate 106 which is one of the two substrates. Further, a glass pipe 110 is fastened to the outer surface of the exhaust port 109 to suck and exhaust air in the space S between the two substrates 101 and 106 through the glass pipe 110 to make the space to be vacuum. Then, the glass pipe is sealed up to seal the vacuum state. However, the glass pipe excessively projects over the substrate after the glass pipe has been sealed up so that the thickness and size reductions are hindered. In particular, if the conventional structure is adapted to a display of a watch or the like, there is a fear that the layout encounters a problem. Further, high temperature (about 1000°C) is applied at the time of sealing up the glass pipe, resulting in gas removal. The removed gas is introduced into the foregoing space, causing a problem to take place in that the degree of vacuum is lowered.

It has been know that getter material is used to raise the degree of vacuum. For example, a conventional fluorescent display tube has been constituted as shown in Fig. 24 so that a getter material constituted by enclosing mixture powder 112 of $BaAl_4$ and Ni into an annular metal container 111 made of pure iron or the like and having a channel-like cross sectional shape is disposed in the fluorescent display tube to be evaporated and revived with high-frequency heat to adsorb gas in the display tube so as to raise the degree of vacuum.

However, getter material of the foregoing type is enclosed in a large metal container, resulting in that the thickness and the size of the apparatus cannot easily be reduced if the getter material is used in the fluorescent display apparatus. In the foregoing case where the getter material is evaporated and revived with the high frequency heat, there is a fear that, for example, the conductive member, such as the gate electrode, is broken with the heat. If a conductive substrate, such as a silicon substrate, is employed to serve as the foregoing substrate, a similar fear arises.

The present invention has been suggested in view of overcoming the foregoing problems and objects of the present invention are as follows:

1.) It is an object to provide a fluorescent display apparatus in which its fluorescent substance is not separated even if the electric-field electron discharge device and the fluorescent layer are allowed to come closer to each other in order to improve the resolution or to reduce the thickness and which is capable of satisfactorily performing display even if the display apparatus is adapted to low-speed electron beams and to provide a method of forming the fluorescent layer of the apparatus.

2.) It is another object to provide a fluorescent display apparatus having a sealing member for sealing an exhaust port that does not outwardly project over the substrate as projected in the conventional structure and capable of maintaining the space between substrates at a satisfactory vacuum state and to provide a method of sealing vacuum in the space in the apparatus.

3.) It is another object to provide a fluorescent display apparatus that can be provided with getter material while preventing occurring of a problem at the time of reducing the thickness and the size of the apparatus and that is able to easily evaporate and revive the getter material and to provide a method of raising the degree of vacuum in the space in the apparatus.

Disclosure of the Invention

A fluorescent display apparatus according to the present invention is characterized by a fluorescent display apparatus for performing a desired display by irradiating a fluorescent layer with electrons discharged from electric-field electron discharge devices, comprising at least a fluorescent substance and low-fusing-point glass serving as an adhesive agent that form said fluorescent layer. By containing the low-fusing-point glass serving as the adhesive agent in the fluorescent layer, the fluorescent layer can be strongly held by a substrate or the like.

As the method of forming the foregoing fluorescent layer, paste obtained by mixing fluorescent substance powder, low-fusing-point glass powder and a binder may be applied to the substrate or the like, followed by drying the paste, and then sintering is performed at a temperature higher than a fusing point of said low-fusing-point glass so that said fluorescent layer is formed. As a result, a fluorescent display apparatus having the fluorescent layer strongly held by the substrate or the like can easily be manufactured.

The fluorescent display apparatus according to the present invention is characterized by a fluorescent display apparatus in which a device substrate having electric-field electron discharge devices and an opposing substrate having a fluorescent layer are hermetically held by an interposed member interposed in the peripheral portions of the two substrates at a predetermined interval, air between the two substrates is exhausted through an exhaust port formed in one of the substrates, followed by sealing vacuum the space between the two substrates, and the fluorescent layer is irradiated with electrons discharged from the electric-field electron discharge devices to perform a desired display, wherein the exhaust port is sealed up with solder. By sealing the exhaust port with the solder as described above, the excessive projection of the sealing member over the outer surface of the substrate can be prevented. Further, the space between the substrates can be satisfactorily maintained at a vacuum sealed state.

As the sealing method using solder as described above, when air between the two substrate is exhausted through the exhaust port formed in one of the substrates to seal up the space, said fluorescent display apparatus is placed on a frame in a vacuum chamber while allowing said exhaust port to face downwards, spherical solder is disposed between the frame and said exhaust port, air in the space between the two substrates is exhausted through a portion between said exhaust port and said solder to realize a vacuum state, and the solder is heated and melted to be injected into said exhaust port to seal up said exhaust port. As a result, the process for making the space between the substrates to be vacuum and the space for sealing up the exhaust port 2a can be continuously performed.

The fluorescent display apparatus according to the present invention is characterized in a fluorescent display apparatus in which a device substrate having electric-field electron discharge devices and an opposing substrate having a fluorescent layer are hermetically held by an interposed member interposed in the peripheral portions of the two substrates at a predetermined interval, space between the two substrates is made vacuum, and the fluorescent layer is irradiated with electrons discharged from the electric-field electron discharge devices to perform a desired display, wherein getter material for maintaining the vacuum state in the foregoing space is formed on the inner surface of the foregoing space to have a thin film shape. By forming the getter material for maintaining the vacuum state of the space between the two substrates on the inner surface of the foregoing space to have the thin film shape, the getter material can be disposed while preventing problems occurring at the time of reducing the thickness and the size of the apparatus.

In order to make the space in the apparatus to be vacuum by using the getter material, for example, the getter material is previously formed on the inner surface of the device substrate and/or the inner surface of the opposing substrate to form a thin film shape, the two substrates are hermetically held by an interposed member interposed in the peripheral portions of the two substrates at a predetermined interval, air in the space is exhausted, followed by sealing the space, and the getter material is irradiated with laser beams to be vaporized and revived. As a result, the getter material can easily be formed and revived, and breakage of conductive members such as the gate electrode can be prevented.

Brief Description of Drawings

Fig. 1 is a plan view which illustrates an embodiment of a fluorescent apparatus according to the present invention;

Fig. 2 is a cross sectional view taken along line A-A of Fig. 1;

Fig. 3 is a cross sectional view taken along line B-B of Fig. 1;

Fig. 4 is a cross sectional view taken along line C-C of Fig. 1;

Fig. 5 is an enlarged plan view which illustrates a one-segment portion of the foregoing embodiment;

Fig. 6 is a cross sectional view taken along line D-D of Fig. 5;

Fig. 7 is an enlarged view which illustrates an electric-field electron discharge device according to the foregoing embodiment;

Fig. 8 is a graph showing the evaluation of adhesive strength with respect to the quantity of mixture of low-fusing-point glass;

Fig. 9 is a graph which shows the optimum composition ratio of a fluorescent substance, low-fusing-point glass and a binder;

Fig. 10 is a graph which shows a schedule for forming a fluorescent layer;

Fig. 11 is a cross sectional view which illustrates an example of a sealing structure for sealing an exhaust port with solder;

Fig. 12 is a cross sectional view which illustrates another example of the sealing structure for sealing the exhaust port with the solder;

Fig. 13 is a vertical cross sectional view which illustrates a vacuum chamber;

Figs. 14 (a) and (b) illustrate the procedure of sealing the exhaust port;

Fig. 15 illustrates the time schedule of a vacuum sealing process;

Fig. 16 is a plan view which illustrates an essential portion for explaining the procedure of irradiating getter material with laser beams;

Fig. 17 is a cross sectional view which illustrates an essential portion of a state where the getter material is irradiated with laser beams;

Fig. 18 is a flow chart which illustrates an example of the process of manufacturing the fluorescent display apparatus;

Fig. 19 is a cross sectional view which illustrates an example in which the getter material is embedded in a recess formed in an opposing substrate;

Fig. 20 is a plan view which illustrates an essential portion for explaining another embodiment of the fluorescent display apparatus according to the present invention;

Fig. 21 is a vertical cross sectional view which illustrates the foregoing other embodiment;

Fig. 22 is a vertical cross sectional view which illustrates a conventional fluorescent display apparatus;

Fig. 23 is a schematic vertical cross sectional view which illustrates a conventional vacuum sealing structure; and

Figs. 24 (a) and (b) respectively are a plan view and a cross sectional view which illustrate conventional getter material.

Best mode for Carrying Out the Invention

With reference to embodiments shown in the drawings, a fluorescent display apparatus, a method of forming a fluorescent layer of the apparatus, a method of sealing vacuum in the space of the apparatus and a method of raising the degree of vacuum according to the present invention will now be described specifically.

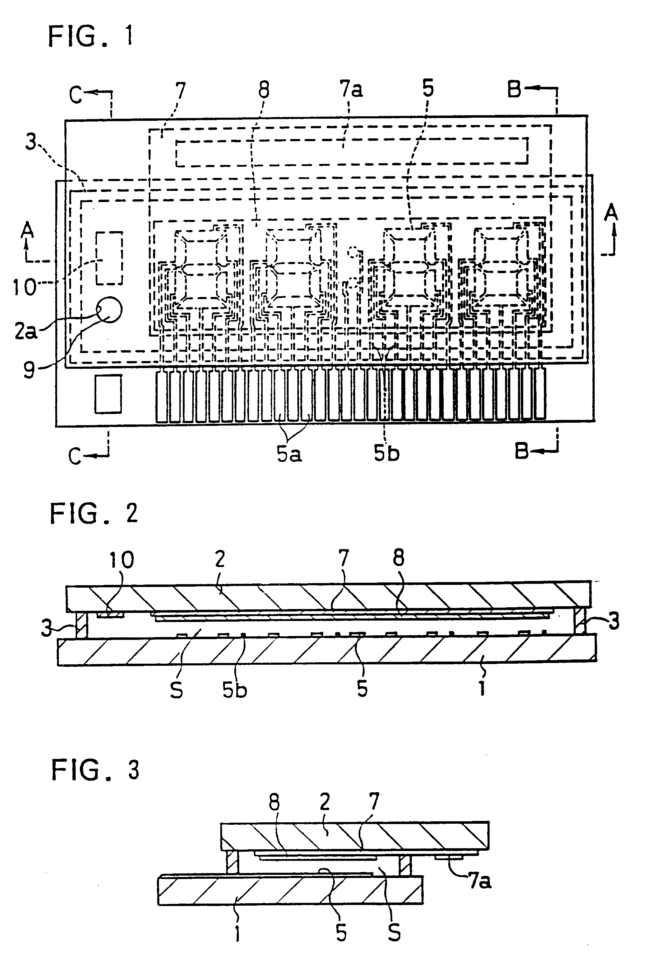

Fig. 1 is a plan view which illustrates an embodiment of the fluorescent display apparatus according to the present invention, and Fig. 2, Fig. 3 and Fig. 4 respectively are cross sectional views taken along lines A-A, B-B and C-C of Fig. 1. This embodiment is adapted to a character display for performing a clock display.

Referring to the drawing, reference numeral 1 represents a device substrate which is, in this embodiment, an n-type single crystal silicon substrate having a (100) plane orientation. Opposing substrate 2 is disposed above the device substrate 1 at a predetermined interval to be substantially in parallel with the device substrate 1. An interposed member 3 interposed between the two substrates 1 and 2 in a peripheral portion of the same enables them to be brought into contact and bonded to each other in a hermetical manner. Further, space S is formed between the two substrates 1 and 2 in a portion surrounded by the interposed member 3.

As for the material of the opposing substrate 2, it is preferable that a material having a coefficient of thermal expansion which approximates that of the device substrate 1 be used. In this embodiment, a transparent glass substrate ("#7740" manufactured by Coning) made of borosilicate glass is employed.

As for the material of the interposed member 3, it is preferable to employ material having the coefficient of thermal expansion which approximates those of the two substrates 1 and 2 in order to reduce stress after the two substrates 1 and 2 have been bonded to each other. In particular, it is preferable to use material that has the coefficient of thermal expansion which is an intermediate value of them. This embodiment uses a low-fusing-point powder glass having an operational temperature of $450°C$ and a coefficient of thermal expansion of $53 \times 10^{-7}/°C$.

It is preferable that a spacer or the like is mixed with the interposed member 3 in order to maintain the two substrates 1 and 2 at the parallel state. In this case, the space or the like must be selected that is not plasticized at the time of heating, melting and plasticizing the interposed member 3. In this embodiment, a spherical glass spacer is used which has a plasticization point that is higher than the sealing temperature. The particle size of the spacer must be at least larger than the thickness of a fluorescent layer 8 to be described later. In this embodiment, a spacer having a particle size of 60 $\mu$m is used so that the two substrates 1 and 2 are disposed at an interval of about 60 $\mu$m to run parallel to each other.

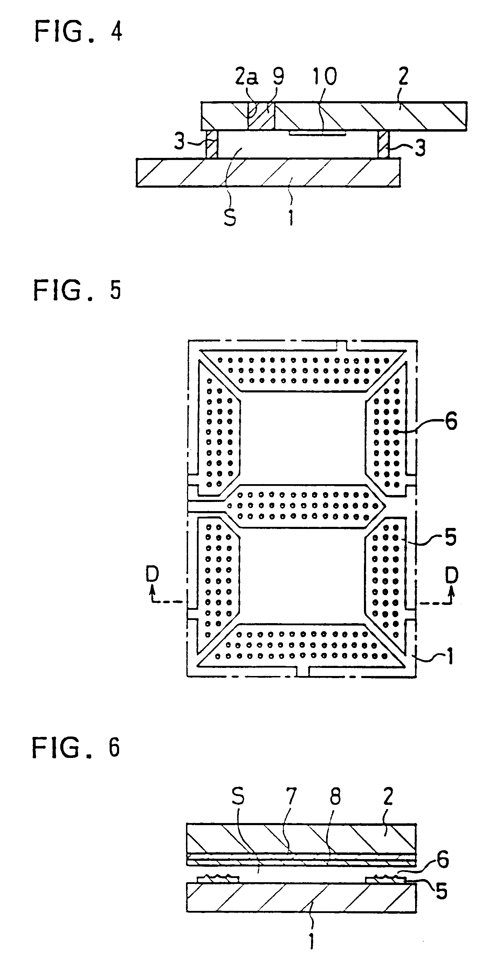

A plurality of segment electrodes 5 disposed to display a clock are formed on the surface of the device substrate 1 in the space S, each segment electrode 5 having a plurality of electric-field electron discharge devices 6 serving as the electron discharge sources as shown in Figs. 5 and 6. Reference numeral 5a represents segment terminals 5a for connecting each of the segment electrodes 5 to an external circuit, each terminal 5a being formed on the surface of the insulating substrate 1 outer than the space S and connected to each of the segment electrodes 5 and via segment wirings 5b.

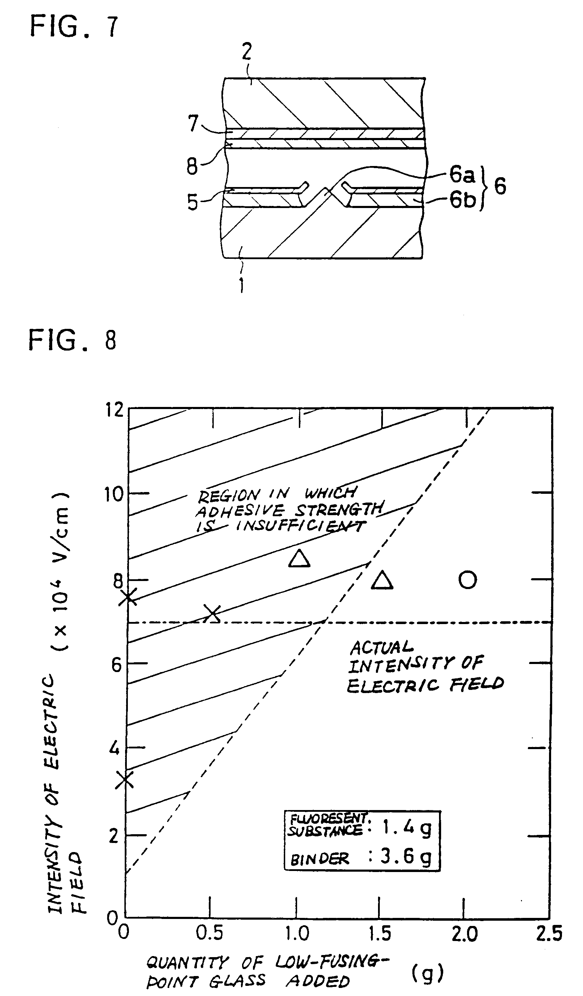

The electric-field electron discharge devices 6 are, as shown in Fig. 7, each constituted by a substantially-conical projection 6a formed by an anisotropic etching method or the like, an insulating layer 6b formed on the surface of the device substrate 1 except for the portion adjacent to the projection 6a and made of a silicon-dioxide thin film or the like and a segment electrode (gate electrode) 5 formed on the surface of the insulating layer 6b, having an opening portion formed into a substantially circular plane at a position adjacent to the upper portion of the projection 6a and made of a molybdenum thin film or a tantalum thin film or the like.

It is preferable that the density of the electric-field electron discharge device 6 is $4 \times 10^4$ - (piece/cm$^2$) or more. However, the density may be determined while considering the distance $d_{AK}$ (cm) from the electric-field electron discharge device 6 and the fluorescent layer 8 to be described later, the density being aimed at $1/d_{AK}^2$ (piece/cm$^2$) or more. In this embodiment, the electric-field electron discharge device 6 is formed at a rate of device/25 $\mu$m$^2$ so that about 1000 to 2000 electric-field electron discharge devices 6 are disposed.

The structure of the electric-field electron discharge device 6 is not limited to the foregoing embodiment. For example, a Spindt type structure as reported in JAP, Vol. 47 (1976) p.5248 or a lateral type structure as reported in Technical Digest of IVMC '91 (1991) p.46 or a structure as reported in the Technical Digest of IVMC '91 (1991) p.26 and that can be manufactured by RIE and heat oxidation.

On the other hand, an anode electrode 7 that is common to all segments on the device substrate 1 is formed on the surface of the opposing substrate 2 in the space S. The anode electrode 7 is made of an ITO thin film used in this embodiment and formed to have a thickness of 2000 Ångstrom. In the drawing, reference numeral 7a represents an anode terminal to be connected to an external circuit of the anode circuit 7. In this embodiment, a Cr-thin-film is formed on the anode electrode 7 projecting outwardly from the space S but the external circuit may be directly connected to the anode electrode 7 projecting outwardly from the space S.

The fluorescent layer 8 is formed on the surface of the anode electrode 7, the fluorescent layer 8 containing, in this embodiment, a low-fusing-point glass serving as an adhesive agent in a fluorescent substance thereof.

As the foregoing fluorescent substance, ZnO:Zn emitting green light is used in this embodiment. For example, ZnS:Cl + In$_2$O$_3$ emitting blue light or ZnS:Ag + In$_2$O3 emitting orange light may be used. By using plural kinds of the foregoing fluorescent substance, multi-color display or full-color display can be performed.

As for the low-fusing-point glass, it is preferable to employ that having the same coefficient of thermal expansion as that of the opposing substrate 2 which supports the fluorescent layer 8. For example, low-fusing-point glass having the coefficient of thermal expansion in a range from $20 \times 10^{-7}/°C$ to $90 \times 10^{-7}/°C$ is used. Specifically, frit glass (T436 made by Iwaki Glass Co., Ltd. or the like) or crystallized low-fusing-point glass or the like may be used. In this embodiment, the frit glass is used, the coefficient of thermal expansion of which is $60 \times 10^{-7}/°C$ and the operational temperature of which is $450°C$. An alkali metal silicate type inorganic adhesive agent or a phosphate-type inorganic adhesive agent may be used as the low-fusing-point glass.

The fluorescent layer 8 may be formed in such a manner that, for example, the powder fluorescent substance and the low-fusing-point glass are mixed with each other, and a binder is mixed to it to form paste material, and the paste is applied to the surface of the anode electrode 7 followed by drying and sintering it.

As the binder, an organic binder such as vehicle may be used. In this embodiment, the binder is prepared by mixing 2 to 5 % nitrocellulose with butylcarbitol acetate.

As for the ratio of mixture of the foregoing fluorescent substance and the low-fusing-point glass, if proportion of the low-fusing-point glass is too small with respect to the fluorescent substance, the adhesive force is reduced. If the same is too large, the resistance is made excessively large or the display is darkened. Therefore, it is preferable that the low-fusing-point glass is 20 to 70 wt% with respect to the sum of the weight of the fluorescent substance and that of the low-fusing-point glass.

If the proportion of the binder is too small, the thickness is made thick when it is applied. If the same is too large, the thickness is made too thin. Therefore, it is necessary for the proportion to be adjusted arbitrarily while considering the thickness of the fluorescent layer 8 to be formed. When the thickness of the fluorescent layer 8 is made to be about 10 $\mu$m by using butylcarbitol acetate, to which 3 % nitrocellulose is mixed, as the binder, it is preferable that the proportion is about 20 to 80 wt% with respect to the sum of the weight of the fluorescent substance and that of the low-fusing-point glass.

Fig. 8 shows the result of an evaluation of the adhesive strength of the fluorescent layer with respect to the intensity of the electric-field when, in the mixture, the quantity of the low-fusing-point glass is arbitrarily changed with respect to 1.4 g of the fluorescent substance and the fluorescent layer 8 is formed by adding 3.6 g of the binder. The actual intensity of the electric field in the vicinity of the electric-field electron discharge device 6 according to the foregoing embodiment was about $7 \times 10^4$ V/cm. It has been found that the quantity of mixture of the frit glass must be about 1.2 g or more in the foregoing case.

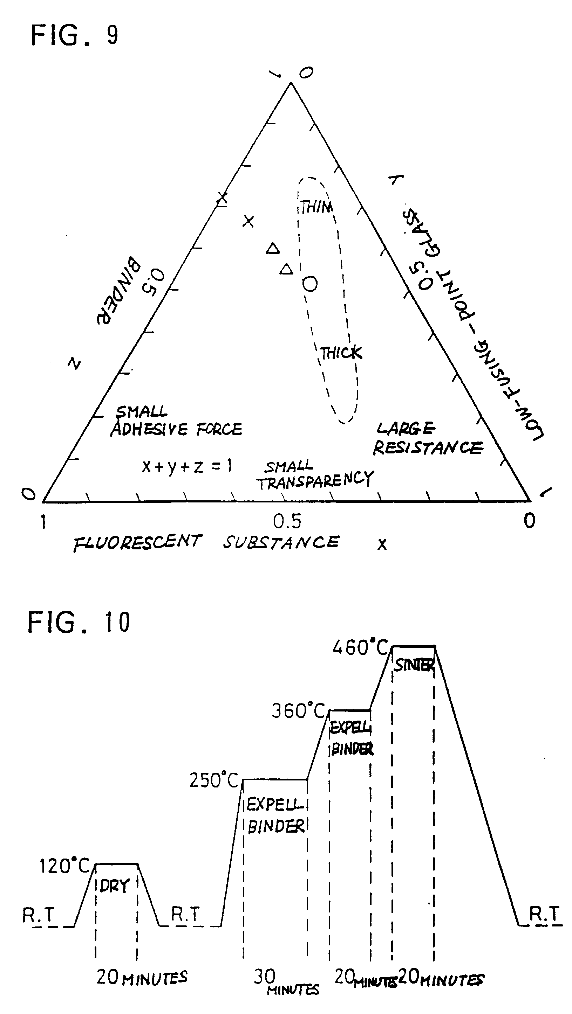

The proportion of the weight of the mixture of the foregoing fluorescent member, the low-fusing-point glass and the binder and characteristics attained due to the mixture are shown in Fig. 9. Fig.

9 shows the result of an examination of the proportion in a case where x + y + z = 1 assuming that the proportion of the fluorescent substance is x, the proportion of the low-fusing-point glass is y and the proportion of the binder is z. It has been found that a portion adjacent to mark O of Fig. 9 shows the most suitable proportion in which the proportion of the weight of the mixture of the foregoing fluorescent member, the low-fusing-point glass and the binder x:y:z = 0.2:0.29:0.51.

If the result is included in a region of the proportion of the weight of the mixture (x = 0.05 to 0.30 wt%, y = 0.15 to 0.55 wt% and z = 0.15 to 0.80 wt%) designated by a dashed line, excellent adhesive strength is attained. The proportion of the mixture may be arbitrary selected from the proportions included in the foregoing region while considering the transmittance and the conductivity.

When the fluorescent layer 8 was formed on the surface of the anode electrode 7 at the foregoing proportion of the weight of the mixture, it was satisfactorily in contact with the anode electrode 7 and it withstood electric fields stronger than $8 \times 10^4$ V/cm (400 V or more at a gap of 50 $\mu$m), resulting in sufficient practical level adhesive force to be obtained. A schedule of forming the fluorescent layer at this time is shown in Fig. 10.

A fluorescent display apparatus of the foregoing type must make the portion between the electric-field electron discharge device 6 and the fluorescent layer 8, that is the space S between the two substrates 1 and 2 to be vacuum similarly to the foregoing conventional example. An example of the structure for realizing the vacuum state and a method of sealing the vacuum state will now be described.

Referring to the Figs. 1 and 4, reference numeral 2a represents an exhaust port 2a for exhausting air in the space S surrounded by the two substrates 1, 2 and the interposed member 3 to realize a vacuum state. The vacuum state is realized by exhausting air in the space S through the exhaust port 2a, followed by hermetically sealing the exhaust port 2a by a solder 9.

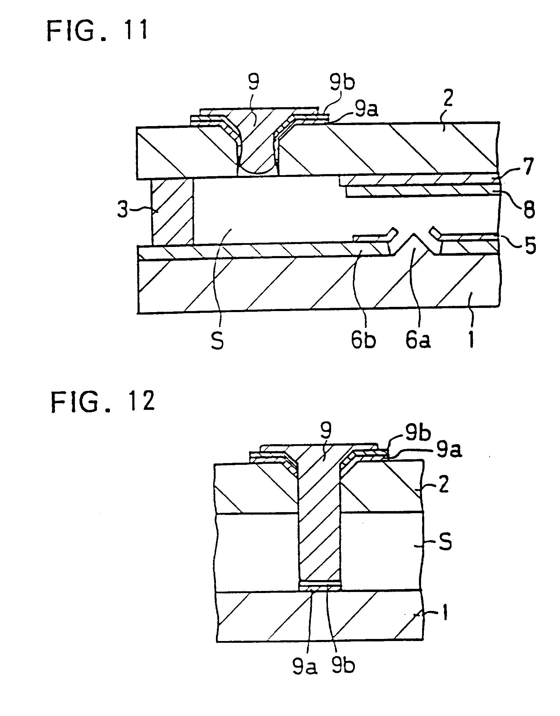

Fig. 11 illustrates an example of a state where the exhaust port 2a is sealed up with the solder 9 as described above, wherein the solder 9 is, from an outer position, embedded into the exhaust port 2a formed in the opposing substrate 2. As the solder 9, it is preferable to employ a Pb-Sn alloy. In this embodiment, a Pb-Sn alloy containing Pb by 37 wt% is used.

By forming the outer opening portion of the exhaust port 2a into a funnel shape as illustrated, the area of contact with the solder 9 can be widened to enlarge the strength of the connection.

It is preferable to interpose an intermediate member between the opposing substrate 2 and the solder 9 if necessary in order to improve the contact between them. In this embodiment, a first intermediate member 9a made of Cr and a second intermediate member 9b made of an Au-Sn alloy containing Au by 80 wt% are sequentially interposed between the opposing substrate 2 and the solder 9.

Since the contact among the first intermediate member 9a made of Cr, the opposing substrate 2 and the second intermediate member 9b made of the Au-Sn alloy is excellent and the contact between the second intermediate member 9b and the solder 9 is excellent, the solder 9 can be strongly and hermetically brought into contact and fixed to the opposing substrate while interposing the intermediate members 9a and 9b.

Fig. 12 is a cross sectional view which illustrates another specific example of a state where the exhaust port 2a is sealed up by the solder 9. This example is arranged so that the solder 9 is extended to the inner surface of the device substrate 1 opposing the opposing substrate 2. The intermediate members 9a and 9b similar to the foregoing structure are interposed between the device substrate 1 and the solder 9.

By extending the solder 9 to the inner surface of the device substrate 1 opposing the opposing substrate 2 as described above, the device substrate 1 and the opposing substrate 2 can be fixed further strongly while interposing the solder 9. As a result, pressure resistance can be improved when the space S between the two substrates 1 and 2 has been made vacuum and, accordingly, the difference between the external pressure and the internal pressure has been enlarged. Further, the solder 9 is enabled to also have a function as an interval-maintaining spacer between the two substrates 1 and 2.

In order to hermetically seal the exhaust port 2a with the solder 9 as described above, the following procedure may be employed for example.

First, the exhaust port 2a is previously formed in the opposing substrate 2 by, for example, a ultrasonic machine or the like. By first forming a hole in the surface, which is in contact with the space S, by using the ultrasonic machine or the like in this case, the end portion of the hole is removed at the time of the completion of the formation of the hole. As a result, the funnel-like hole can inevitably be formed as shown in Figs. 11 and 12.

Then, the intermediate members 9a and 9b are formed in the opening portion of the exhaust port 2a by evaporating or sputtering. If the formation is performed prior to coupling the two substrates 1 and 2 together, the intermediate members 9a and 9b can be formed in only the opposing substrate 2 as shown in Fig. 11. If the formation is performed after the two substrates 1 and 2 have been coupled together, the intermediate members 9a and 9b can be simultaneously formed in both opposing substrate 2 and the device substrate 1 as shown in Fig. 12.

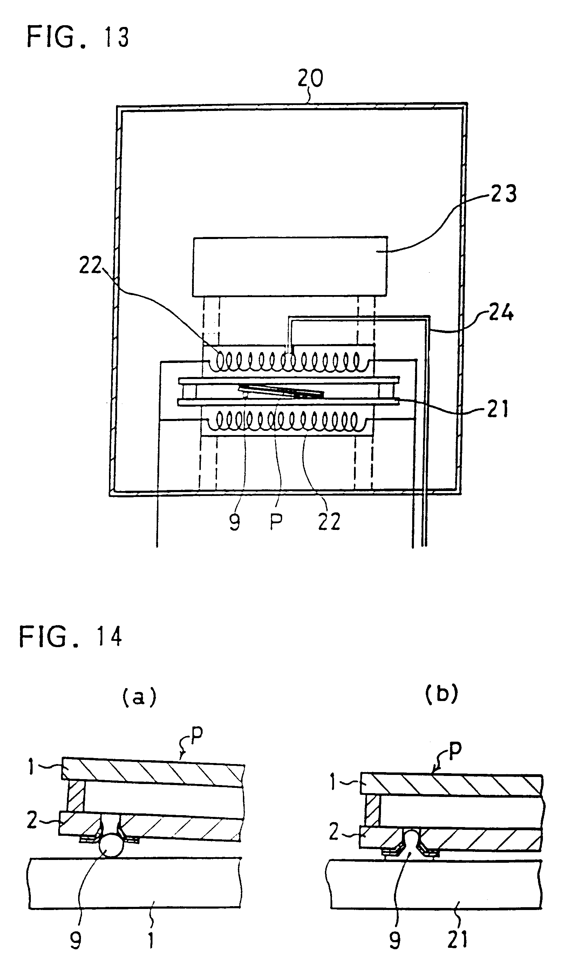

Finally, the space S between the two substrates 1 and 2 is made vacuum, and then the exhaust port 2a is sealed up with the solder 9. For example, a method may be employed in which a panel P obtained by integrating the two substrates 1 and 2 is placed on a frame 21 in a vacuum chamber 20 while causing the exhaust port 2a face downwards as shown in Fig. 13, followed by the spherical solder 9 is disposed between the frame 21 and the exhaust port 2a as shown in Fig. 14 (a). Then, the space in the vacuum chamber 20 is made vacuum, and then air in the space S between the two substrates 1 and 2 is exhausted through a space between the exhaust port 2a and the solder 9 to realize vacuum. Then, a heater 22 is used to heat and melt the solder 9 to be injected into the exhaust port 2a. The solder 9 is then hardened so that the exhaust port 2a is sealed up as shown in Fig. 14 (b). Referring to Fig. 13, reference numeral 23 represents a weight and 24 represents a thermocouple.

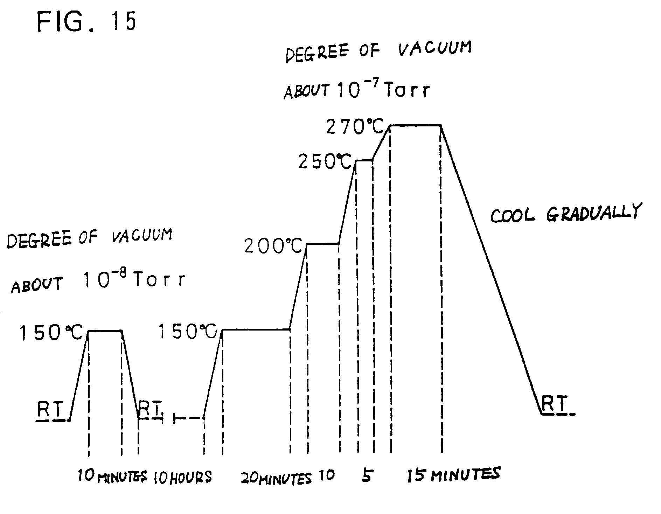

An example of a time schedule to be employed at the time of making the space S between the two substrates 1 and 2 to be vacuum and sealing up the exhaust port 2a with the solder 9 as described above is shown in Fig. 15.

By employing the foregoing method, the process for making the space S between the two substrates 1 and 2 to be vacuum and the process for sealing up the exhaust port 2a can be easily continuously performed. Further, the outer surface of the solder 9 can be mad flat as shown in Fig. 14 (b) with the dead weights of the two substrates 1 and 2 and the like.

Referring to Figs. 1 and 2, reference numeral 10 represents a getter material which is for adsorbing residual gas in the space S and which is formed on the inner surface of the opposing substrate 2 by evaporation or the like to be formed into a thin film. After the space S has been made to be vacuum by exhausting, the getter material 9 is irradiated with laser beams to evaporate and revive it for the purpose of adsorbing the residual gas in the space S.

As the foregoing getter material, an AlMg alloy, an AlBa alloy, Ti, a Zr alloy or a Hf alloy may be employed. If the thickness of the getter material 10 is too thin, only an unsatisfactory effect of adsorbing the residual gas can be obtained. If it is too thick, it cannot be evaporated by the laser beams. Therefore, it is preferable that the thickness is ranged from 1000 to 6000 Ångstrom. In this embodiment, an AlMg thin film containing Mg by 10 % is used, the thickness of which is about 3000 angstrom. The area in which the getter material is formed may be widened to be adaptable to the size of the vacuum layer, the area being made to be 20 mm$^2$ in this embodiment.

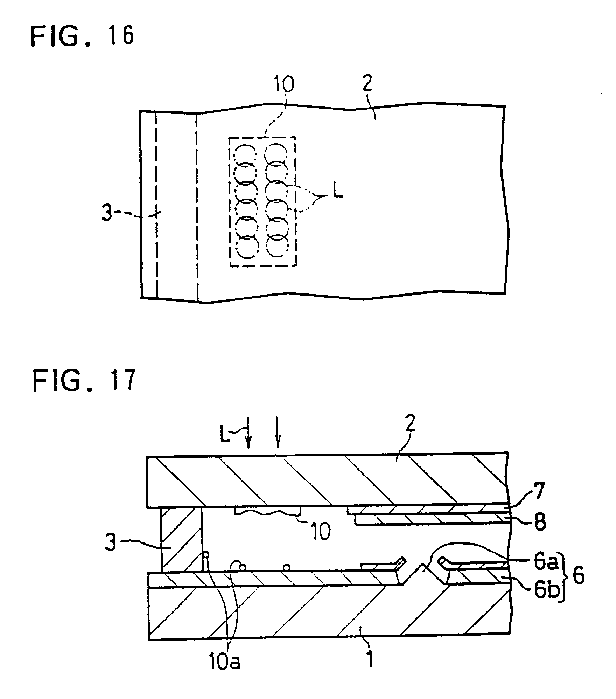

When the getter material 10 is formed, it is previously formed on the opposing substrate by a vacuum evaporation method or the like prior to bonding the two substrates 1 and 2 to each other. Then, the two substrates 1 and 2 are bonded to each other, followed by making the space S to be vacuum. Then, laser beams L are applied to the getter material 10 from a position outside the opposing substrate 2 as designated by arrows of Fig. 17. For example, the laser beam irradiation is performed to sequentially form irradiation spots as designated with dashed lines of Fig. 16.

When the getter material 10 is irradiated with the laser beams as described above, the getter material 10 is made to be fine grains 10a as shown in Fig. 17 to be evaporated and flown so that the getter material 10 is revived and, accordingly, the residual gas in the space S is adsorbed. As a result, the degree of vacuum can be raised.

As the laser beam, YAG laser, CO$_2$ laser, Ar-ion laser, excimer laser or dye laser may be used.

It is preferable to perform bonding of the two substrates 1 and 2 in a vacuum space so that the degree deterioration of the getter material due to oxidation or the like can be lowered.

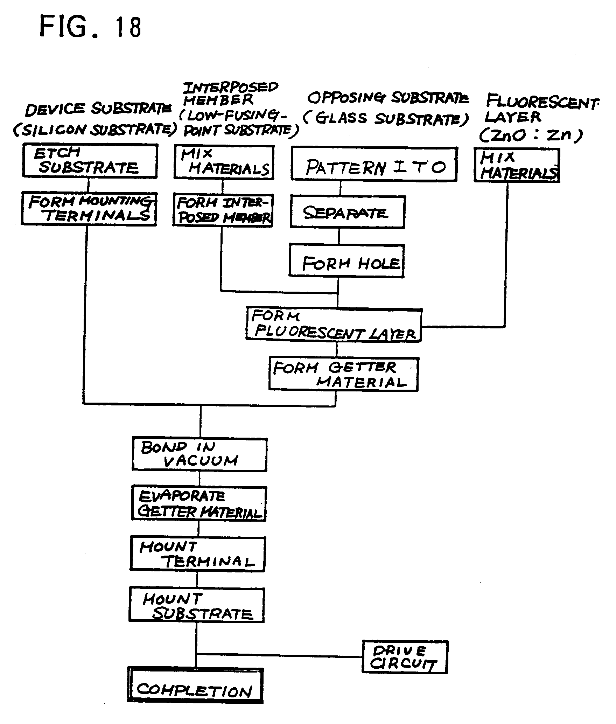

An example of a process for manufacturing the overall body of the foregoing fluorescent display apparatus will now be described with reference to a flow chart shown in Fig. 18.

First, the projection 6a shown in Fig. 7 is formed on the surface of the silicon substrate serving as the device substrate 1 by anisotropic etching. Further, the silicon dioxide thin film to be made the insulating layer 6b and the tantalum thin film to be made the segment electrode 5 are formed on the surface of the silicon substrate by a sputtering method. Then, a selective etching method is used to remove selectively the tantalum thin film and the silicon dioxide thin film formed above the projection 6a so that the projection 6a is exposed. The tantalum thin film is subjected to patterning to be made the segment electrode 5, followed by forming, on each segment terminal 5a, a nickel thin film that can easily be soldered to form mounting terminals.

Since the tantalum thin film enables a stable tantalum oxide film (TaOx) to be easily formed on the surface thereof, disconnection occurring due to electrolytic etching that takes place in a contact portion with the interposed member 3 can be prevented. As a result, an advantage can be obtained in that a reliable wiring can be realized.

On the other hand, the ITO thin film to be made the anode electrode 7 is formed on the glass substrate to serve as the opposing substrate 2, followed by subjecting it to patterning to have a predetermined shape. Then, the glass substrate is cut to have a desired size and shape so that the opposing substrate 2 having the anode electrode 7 on the surface thereof is formed. Then, a process for forming the hole in the glass substrate is performed to form the exhaust port 2a.

Further, the spherical glass spacer and the low-fusing-point powder glass are mixed with each other by using a fluid organic binder to be formed into fluid paste. The paste is, for example, screen-printed on the sealing portion in the periphery of the opposing substrate 2 so that the interposed member 3 is formed. The interposed member 3 is heated at 120°C for 20 minutes for example to be dried in order to vaporize the organic binder solvent contained therein.

Then, the foregoing fluorescent substance and the low-fusing-point glass are mixed into the surface of the anode electrode of the opposing substrate 2 at a predetermined ratio as described above, followed by mixing the fluid organic binder so that the fluid paste is obtained. The fluid paste is applied by a screen-printing method or the like so that the fluorescent layer 8 is formed. In a structure capable of performing a multi-color display or a full-color display, fluorescent substances emitting three colors, red, green and blue are individually mixed with the low-fusing-point glass and the binder to perform the screen-printing three times.

Also the fluorescent-substance layer 8 is heated at, for example, 120°C for about 20 minutes to be dried in order to vaporize the organic binder contained therein. Then, the temperature is gradually raised to, for example, about 340°C to 450°C so that the interposed member 3 is temporarily sintered and the florescent layer 8 is simultaneously sintered. Further, the getter material 10 is formed on the opposing substrate 2 by evaporation or the like.

Then, the opposing substrate 2 and the device substrate 1 having the electric-field electron discharge devices 6 are aligned to each other, followed by making them to face and run parallel while interposing the interposed member 3. The two substrates 1 and 2 are set in the vacuum chamber while applying a load.

In a state where the pressure has been lowered in the vacuum chamber, heating at a temperature lower than the sealing temperature is sufficiently performed to remove gas in order to exhaust and remove the residual gas and organic material in the space S through the exhaust port 2a. Then, the interposed member 3 is heated to, for example, 450°C to be melted and sintered so that the two substrates 1 and 2 are hermetically vacuum-bonded to each other. Then, air in the space S is vacuum-exhausted through the exhaust port 2a, and then the exhaust port 2a is hermetically sealed up with the sealing member 9, such as the solder. As a result, the space S is maintained at the vacuum state.

Finally, the two substrates 1 and 2 bonded as described above are ejected from the vacuum chamber, followed by irradiating the getter material 10 disposed on the surface of the opposing substrate 2 with the laser beams from a position outer than the opposing substrate 2 to raise the temperature to be evaporated and flown onto the surface of the device substrate 1 and the like, resulting in adsorbing the gas generated or left in the space S. As a result, the degree of vacuum is raised.

Each electrode formed as described above is subjected to a terminal mounting and substrate mounting process, followed by connecting a drive circuit. As a result, the fluorescent display apparatus is completed. The fluorescent display apparatus manufactured in this embodiment had a thickness of about 2 mm, and a size of 15 mm x 25 mm, resulting in a very thin thickness, small size and reduced weight. The dimensions of its display portion were 12 mm x 22 mm and its time-display portion composed of 7 segments was made to be 4 mm x 2.5 mm.

In the foregoing process, the process for heating the interposed member 3 to be formed on the opposing substrate 2 at a temperature higher than the sealing temperature may be performed prior to performing the process for bonding the opposing substrate 2 and the device substrate 1 to each other in the vacuum state while interposing the interposed member 3. By heating the interposed member 3 at a temperature higher than the fusing point in the vacuum state as described above, the gas and organic material and so forth contained in the interposed member 3 are removed to prevent generation of gas at the time of performing sealing. Therefore, a fluorescent display apparatus exhibiting excellent degree of vacuum and airtightness can be realized. A process for irradiating the opposing substrate 2 or the device substrate 1 with light in a vacuum state to remove gas may be performed prior to performing the process for bonding the opposing substrate 2 and the device substrate 1 to each other in the vacuum state while interposing the interposed member 3. By irradiating the surface of each substrate with light in the vacuum state as described above while using a mercury lamp, a halogen lamp or laser beams including ultraviolet rays as the light source, gas molecules and organic material and so forth adhered to the surface of the substrate are activated and removed so that the surface is cleaned up. In particular, it is effective to clean the surface of the projection 6a of the electric-field electron discharge device 6. The foregoing light irradiation process causes effects of uniform and low threshold voltage enabling the stability of the discharge current to be improved. As a result, a reliable fluorescent display apparatus can be obtained.

The fluorescent display apparatus manufactured as described above is operated by applying gate voltage $V_{GX}$ having positive potential to the segment electrode 5 serving as the gate electrode with respect to the projection 6a serving as the cathode electrode to apply an intense electric field to a portion adjacent to the leading portion of the projection 6a. As a result, electrons are discharged into the vacuum space S from the portion adjacent to the projection 6a due to the tunnel effect. Discharged electrons are then accelerated with positive-potential anode voltage $V_{AK}$ applied to the anode electrode 7 are applied and injected into the fluorescent layer 8. As a result, the fluorescent layer 8 is excited so that the fluorescent substance in the fluorescent layer 8 emits light. As a result, a desired display can be performed.

At this time, electrons emitted from the projection 6a are distributed in the form of an inverse-cone, the vertex of which is the leading portion of the projection 6a. As a result, electrons are applied to the surface of the fluorescent layer 8 in a circular portion, the radius of which is substantially $d_{AK}$. Anode electric current $I_{AK}$ to be introduced into the fluorescent layer 8 at this time is controlled with $V_{GK}$ when $V_{AK} \gg V_{GK}$. Anode electric current $I_{AK}$ per electric-field electron discharge device was $I_{AK} = 5 \times 10^{-10}$ A ($V_{AK} = 200$ V) when $V_{GK} = 70$ V.

When the anode voltage is lowered to a level similar to or lower than the gate voltage, discharged electrons also flow to the gate electrode, resulting in an increase in reactive currents. In order to prevent this, it is preferable to set the voltage to satisfy $V_{AK} > 2 V_{GK}$.

Although the foregoing embodiment comprises the exhaust port formed in the opposing substrate 2 to exhaust air in the space S, the exhaust port may be formed in the device substrate 1 or in both two substrates. Air may be exhausted at the time of sealing up the device substrate 1 and the opposing substrate 2 while interposing the interposed member 3. For example, the interposed member 3 is formed on one of the two substrates 1 and 2, followed by stacking the residual substrate at a temperature lower than the sealing temperature for the interposed member 3. As a result, small projections and pits in the surface of the interposed member 3 create a gap from the foregoing residual substrate and the interposed member 3. By injecting it into the vacuum chamber or the like, air in the foregoing space is exhausted through the gap. In this state, the temperature is required to be raised to a level higher than the sealing temperature to seal and plug the gap.

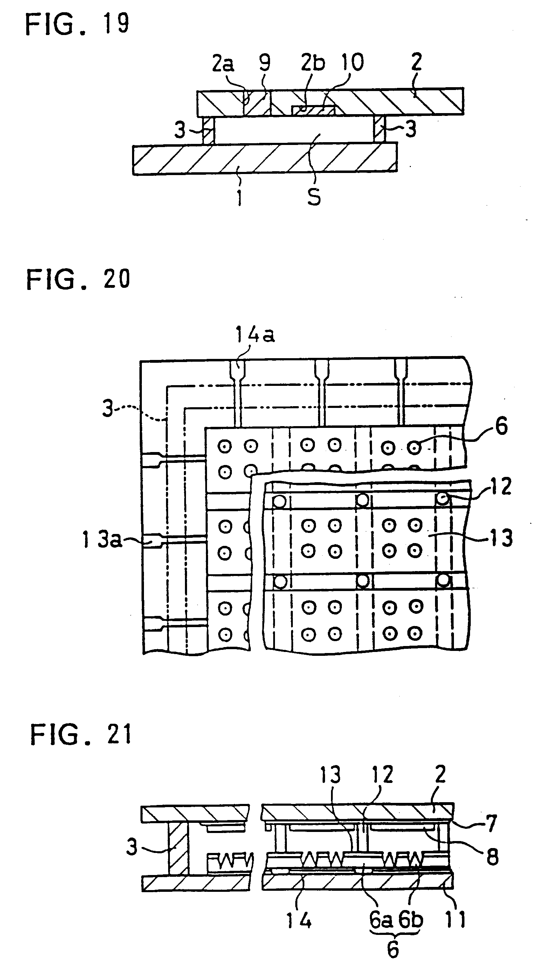

Although the foregoing embodiment comprises the getter material 10 formed on the inner surface of the opposing substrate 2 by evaporating or the like, it may be formed on the device substrate. Furthermore, it may be formed by another means such as sputtering as well as evaporating. For example, a recess 2b may be formed in the opposing substrate 2 as shown in Fig. 19 to embed the getter material 10 into the recess.

Although the foregoing embodiment is adapted to a 7-segment-type character display for clock display, it may be adapted to another fluorescent display apparatus. Figs. 20 and 21 illustrate an example in which the embodiment is adapted to a matrix-type fluorescent display apparatus.

Referring to the drawings, reference numeral 11 represents a matrix-device substrate comprising a silicon substrate or the like, the substrate 11 having the electric-field electron discharge devices 6 arranged similarly to the foregoing embodiment. The electric-field electron discharge device 6 is not limited to the foregoing structure. It may be a spint-type device formed on a glass substrate or a lateral-type device. On the other hand, an ITO thin film 7 to serve as the anode electrode and made of conductive material is formed on the opposing substrate 2. The fluorescent layer 8, which emits fluorescent color, is formed on the ITO thin film 7.

The matrix-device substrate 11 and the opposing substrate 2 are hermetically bonded to each other by means of the interposed member 3, the two substrates being maintained at a predetermined interval by a spacer 12 manufactured by a photoprocess. As the spacer 12, SiOx or the like prepared by a spin coating method is used, the spacer 12 being formed into a columnar shape as shown in Fig. 21 on a stripe gate electrode 13 in which no electric-field electron discharge device 6 is present and on the insulating layer 6b in which no stripe cathode electrode 14 is present.

Further, a gate wiring 13a of the stripe gate electrode 13 for connecting an external circuit and a cathode wiring 14a of the stripe cathode electrode 14 are formed in the outer periphery of the matrix-device substrate 11.

The matrix-type fluorescent display apparatus of the foregoing type is utilized as, for example, a color view finder of a cam coder.

Also the fluorescent layer 8 of the foregoing embodiment may have the structure and may be formed by a method which are similar to those of the foregoing embodiment. In also the foregoing embodiment, the space S between the two substrates 11 and 2 is made vacuum. In this case, an exhaust port may be formed in either of the substrates similar to the foregoing embodiment although omitted from illustration, to seal up it with solder. Also in this case, getter material similar to that of the foregoing embodiment may be disposed on the inner surface of the substrate so as to be irradiated with laser beams to raise the degree of vacuum.

Industrial Applicability

As described above, according to the present invention, the fluorescent display apparatus for performing a desired display by irradiating the fluorescent layer 8 with electrons discharged from the electric-field electron discharge devices has an arrangement that the fluorescent layer 8 is formed by at least the fluorescent substance and the low-fusing-point glass serving as the adhesive agent for the fluorescent substance, that is, the fluorescent layer contains the low-fusing-point glass serving as the adhesive agent. Therefore, the fluorescent layer 8 can be strongly held by the substrate 1 or the like. As a result, a fluorescent display apparatus exhibiting satisfactory durability can be provided.

When the fluorescent layer is formed, for example, paste obtained by mixing the fluorescent substance powder, the low-fusing-point glass powder and the binder may be applied to the substrate or the like, followed by drying the paste, and then sintering is performed at a temperature higher than the fusing point of the low-fusing-point glass. Therefore, the fluorescent layer can easily be formed.

The fluorescent display apparatus in which a device substrate 1 having electric-field electron discharge devices 6 and an opposing substrate 2 having a fluorescent layer 8 are hermetically held by an interposed member 3 interposed in the peripheral portions of the two substrates 1 and 2 at a predetermined interval, air between the two substrates 1 and 2 is exhausted through an exhaust port 2a formed in at least the substrate 2, followed by sealing vacuum the space S between the two substrates 1 and 2, and the fluorescent layer 8 is irradiated with electrons discharged from the electric-field electron discharge devices 6 to perform a desired display, wherein the exhaust port is sealed up with solder. As a result, the excessive projection of the sealing member over the outer surface of the substrate experienced with the foregoing conventional structure can be prevented. Further, the space between the substrates can be satisfactorily maintained at the vacuum state.

According to the foregoing vacuum sealing method of the present invention, the process for making vacuum the space between the substrates and the process for sealing the exhaust port 2a can be easily continuously performed.

As described above, the fluorescent display apparatus according to the present invention comprises the getter material for maintaining the vacuum state in the space between the two substrates which is formed on the inner surface of the space to have a thin film shape as described above. Therefore, the getter material can be disposed in the space while preventing a problem at the time of thinning the thickness and reducing the size of the apparatus.

The method of realizing a vacuum state in the apparatus is arranged so that the getter material is previously formed on the inner surface of the space to have a thin film shape and it is irradiated with laser beams to be vaporized and revived. Therefore, the getter material can easily be vaporized and revived. Further, a fear of breakage caused from excessive heat can be eliminated as experienced with the foregoing conventional high frequency heating method even if the gate electrode is made of a conductive member and if the conductive substrate such as the device substrate is used as the substrate. Therefore, effects can be obtained in that the reliability of the foregoing type fluorescent display apparatus can be improved.

**Claims**

1. A fluorescent display apparatus for performing a desired display by irradiating a fluorescent layer with electrons discharged from electric-field electron discharge devices, comprising at least a fluorescent substance and low-fusing-point glass serving as an adhesive agent that form said fluorescent layer.

2. A fluorescent display apparatus according to claim 1, wherein the proportion of content of said low-fusing-point glass with respect to weight which is the sum of said fluorescent substance and said low-fusing-point glass is in a range from 20 to 70 wt%.

3. A fluorescent display apparatus according to claim 1, wherein low-fusing-point glass that has substantially the same coefficient of thermal expansion as that of a supporting member such as a substrate for supporting said fluorescent layer is used as said low-fusing-point glass.

4. A fluorescent display apparatus according to claim 1 or 3, wherein the coefficient of thermal expansion of said low-fusing-point glass is in a range from $20 \times 10^{-7}/°C$ to $90 \times 10^{-7}/°C$.

5. A fluorescent display apparatus according to claim 1, wherein the density of said electric-field electron discharge devices is $1/d_{AK}^2$ (where $d_{AK}$ is the distance (cm) from said electric-field electron discharge device to said fluorescent layer) or more.

6. A fluorescent display apparatus according to claim 1, wherein said fluorescent substance is made of $ZnO:Zn$, $ZnS:Cl + In_2O_3$ or $ZnS:Ag + In_2O_3$.

7. A fluorescent display apparatus according to claim 1, wherein said fluorescent layer is composed of a fluorescent substance, low-fusing-point glass and a binder and the mixture ratio of them is ranged in such a manner that said fluorescent substance is 0.05 to 0.30 wt%, said low-fusing-point glass is 0.15 to 0.55 wt% and said binder is 0.15 to 0.80 wt%.

8. A method of forming a fluorescent layer of a fluorescent display apparatus for performing a desired display by irradiating said fluorescent layer with electrons discharged from electric-field electron discharge devices, said fluorescent layer being formed by a method comprising steps of:
   applying, to a substrate or the like, paste obtained by mixing fluorescent substance powder, low-fusing-point glass powder and a binder, followed by drying said paste; and sintering said paste at a temperature higher than a fusing point of said low-fusing-point glass so that said fluorescent layer is formed.

9. A fluorescent display apparatus comprising a pair of substrates disposed to face each other and hermetically held at a predetermined interval by an interposed member interposed between the peripheral portions of said two substrates to seal a vacuum state by exhausting air between said two substrates through an exhaust port formed in at least one of said two substrates, wherein said exhaust port is sealed up by solder.

10. A fluorescent display apparatus according to claim 9, wherein said solder is embedded in said exhaust port.

11. A fluorescent display apparatus according to claim 9, wherein said solder is formed to have a length from said exhaust port formed in at least one of said two substrates to reach the inner surface of the residual substrate to be in hermetical contact with said inner surface of said residual substrate.

**12.** A fluorescent display apparatus according to claim 9, claim 10 or claim 11, wherein an intermediate member is interposed on the surface of said solder that is brought into contact with said substrate.

**13.** A fluorescent display apparatus according to claim 12, wherein said intermediate member is made of Cr and an Au-Sn alloy.

**14.** A method of sealing vacuum in an apparatus space of a fluorescent display apparatus in which a pair of substrates disposed to face each other and hermetically held at a predetermined interval by an interposed member interposed between the peripheral portions of said two substrates to seal a vacuum state by exhausting air between said two substrates through an exhaust port formed in at least one of said two substrates, said method of sealing vacuum in an apparatus space of a fluorescent display apparatus comprising steps of: placing said exhaust port on a frame in a vacuum chamber while allowing said exhaust port to face downwards; making a space in said chamber to be vacuum in a state where spherical solder is disposed between said frame and said exhaust port to exhaust air in said space through a portion between said exhaust port and said solder to realize a vacuum state; and heating and melting said solder to be injected into said exhaust port to seal up said exhaust port.

**15.** A fluorescent display apparatus comprising a pair of substrates disposed to face each other and hermetically held at a predetermined interval by an interposed member interposed between the peripheral portions of said two substrates to make a space between said two substrates to be vacuum, wherein getter material for raising the degree of vacuum in said space is formed on the inner surface of said space to have a thin film shape.

**16.** A fluorescent display apparatus according to claim 15, wherein the thickness of said getter material is in a range from 1000 to 6000 angstrom.

**17.** A fluorescent display apparatus according to claim 15 or 16, wherein said getter material is made of an AlMg alloy, AlBa alloy, Ti, a Zr alloy or Hf alloy or the like.

**18.** A fluorescent display apparatus according to claim 15 or 16 or 17, wherein said getter material is embedded in said substrate.

**19.** A method of raising degree of vacuum in an apparatus space of a fluorescent display apparatus in which a pair of substrates disposed to face each other and hermetically held at a predetermined interval by an interposed member interposed between the peripheral portions of said two substrates to make a space between said two substrates to be vacuum, said method of raising degree of vacuum in an apparatus space of a fluorescent display apparatus comprising steps of: forming getter material for raising the vacuum state in said space is previously formed on the inner surface of said space to have a thin film shape; exhausting air in said space to seal up said space; applying laser beams to said getter material to vaporize and revive said getter material.

## FIG. 1

## FIG. 2

## FIG. 3

FIG. 4

FIG. 5

FIG. 6

# FIG. 7

# FIG. 8

# FIG. 9

SMALL
ADHESIVE FORCE

$x + y + z = 1$

SMALL
TRANSPARENCY

LARGE
RESISTANCE

FLUORESCENT SUBSTANCE x

BINDER

LOW-FUSING-POINT GLASS

THIN

THICK

# FIG. 10

460°C SINTER

360°C EXPELL BINDER

250°C EXPELL BINDER

120°C DRY

R.T

R.T

R.T

20 MINUTES

30 MINUTES

20 MINUTES 20 MINUTES

FIG. 11

FIG. 12

FIG. 13

20

23

22

24

21

9   P   22

FIG. 14

(a)

P

1

2

9   1

(b)

P

1

2

9   21

FIG. 15

DEGREE OF VACUUM ABOUT $10^{-7}$ Torr

DEGREE OF VACUUM ABOUT $10^{-8}$ Torr

270°C

250°C

200°C

150°C   150°C

COOL GRADUALLY

RT   RT   RT

10 MINUTES 10 HOURS   20 MINUTES 10   5   15 MINUTES

FIG. 16

FIG. 17

# FIG. 18

DEVICE SUBSTRATE
(SILICON SUBSTRATE)

INTERPOSED MEMBER
(LOW-FUSING-POINT SUBSTRATE)

OPPOSING SUBSTRATE
(GLASS SUBSTRATE)

FLUORESCENT LAYER
(ZnO : Zn)

```
┌─────────────┐   ┌─────────────┐   ┌───────────────┐   ┌────────────┐
│ ETCH        │   │ MIX         │   │ PATTERN ITO   │   │ MIX        │
│ SUBSTRATE   │   │ MATERIALS   │   │               │   │ MATERIALS  │
└─────────────┘   └─────────────┘   └───────────────┘   └────────────┘
       │                 │                  │
┌─────────────┐   ┌─────────────┐   ┌───────────────┐
│ FORM MOUNTING│  │ FORM INTER- │   │ SEPARATE      │
│ TERMINALS   │   │ POSED MEMBER│   │               │
└─────────────┘   └─────────────┘   └───────────────┘
       │                 │                  │
                                     ┌───────────────┐
                                     │ FORM HOLE     │
                                     └───────────────┘
                                            │
                            ┌──────────────────────────┐
                            │ FORM                     │
                            │ FLUORESCENT LAYER        │
                            └──────────────────────────┘
                                     │
                            ┌──────────────────────────┐
                            │ FORM GETTER              │
                            │ MATERIAL                 │
                            └──────────────────────────┘
       │                             │
              ┌────────────────┐
              │ BOND IN        │
              │ VACUUM         │
              └────────────────┘
                      │
              ┌────────────────┐
              │ EVAPORATE      │
              │ GETTER MATERIAL│
              └────────────────┘
                      │
              ┌────────────────┐
              │ MOUNT          │
              │ TERMINAL       │
              └────────────────┘
                      │
              ┌────────────────┐
              │ MOUNT          │
              │ SUBSTRATE      │
              └────────────────┘
                      │              ┌────────────┐
                      │              │ DRIVE      │
                      │──────────────│ CIRCUIT    │
                      │              └────────────┘
              ┌────────────────┐
              │ COMPLETION     │
              └────────────────┘
```

FIG. 19

FIG. 20

FIG. 21

FIG. 22

FIG. 23

FIG. 24

(a)

(b)

| | International application No. |
|---|---|
| | PCT/JP93/00167 |

**A. CLASSIFICATION OF SUBJECT MATTER**

Int. Cl$^5$ H01J31/15, 9/22, 9/39, 29/86, 29/94

According to International Patent Classification (IPC) or to both national classification and IPC

**B. FIELDS SEARCHED**

Minimum documentation searched (classification system followed by classification symbols)

Int. Cl$^5$ H01J31/15, 9/22, 9/39, 29/86, 29/94

Documentation searched other than minimum documentation to the extent that such documents are included in the fields searched

| Jitsuyo Shinan Koho | 1926 - 1992 |
|---|---|
| Kokai Jitsuyo Shinan Koho | 1971 - 1992 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Microfilm of the specification and drawings annexed to the written application of Japanese Utility Model Application No. 83293/1975 (Laid-Open No. 162654/1976) (Toshiba Corp.), December 24, 1976 (24. 12. 76), (Family: none) | 1 |
| Y | JP, B1, 46-19791 (Matsushita Electronics Corp.), June 3, 1971 (03. 06. 71), Lines 30 to 35, column 1 (Family: none) | 1 |
| Y | JP, Y2, 58-10291 (Ise Denshi Kogyo K.K.), February 24, 1983 (24. 02. 83), Lines 7 to 13, column 2 (Family: none) | 9, 10, 12 |
| Y | JP, A, 2-177234 (The Furukawa Electric Co., Ltd.), July 10, 1990 (10. 07. 90), (Family: none) | 15, 19 |

| X | Further documents are listed in the continuation of Box C. | | See patent family annex. |
|---|---|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| April 20, 1993 (20. 04. 93) | May 18, 1993 (18. 05. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)

International application No.

PCT/JP93/00167

C (Continuation). DOCUMENTS CONSIDERED TO BE RELEVANT

| Category* | Citation of document, with indication, where appropriate, of the relevant passages | Relevant to claim No. |
|---|---|---|
| Y | JP, A, 51-9678 (Ise Denshi Kogyo K.K.), January 26, 1976 (26. 01. 76), (Family: none) | 1, 9, 10, 12, 15, 19 |